# EUROPÄISCHE PATENTSCHRIFT

(11) **EP 0 852 712 B1**
(45) Veröffentlichungstag und Bekanntmachung des Hinweises auf die Patenterteilung: **07.08.2002**
(21) Anmeldenummer: 96937188.9
(22) Anmeldetag: 16.09.1996
(51) Int. Cl.: G01M 3/22, F17D 5/04

(54) **VERFAHREN UND VORRICHTUNG ZUR BEREITSTELLUNG EINES VOLUMENS EINER SUBSTANZ**
PROCESS AND DEVICE FOR FEEDING A QUANTITY OF A SUBSTANCE
PROCEDE ET DISPOSITIF POUR PREPARER UN VOLUME DE SUBSTANCE

(30) Priorität: 29.09.1995 DE 19536582
(43) Veröffentlichungstag der Anmeldung: 15.07.1998
(73) Patentinhaber: Framatome ANP GmbH, 91050 Erlangen (DE)
(72) Erfinder: KNOBLACH, Walter, D-91058 Erlangen (DE); FRANZE, Klaus, D-90491 Nürnberg (DE); JAX, Peter, D-91056 Erlangen (DE)
(74) Vertreter: Mörtel & Höfner
(86) Internationale Anmeldenummer: DE9601743
(87) Internationale Veröffentlichungsnummer: WO9713134

(56) Entgegenhaltungen:
- DE-A- 2 431 907
- GB-A- 2 181 259
- PATENT ABSTRACTS OF JAPAN vol. 11, no. 279 (P-614), 10.September 1987 & JP 62 076425 A (TOKYO GAS CO. LTD.)

## Beschreibung

Die Erfindung betrifft ein Verfahren zur Bereitstellung eines Volumens einer Testsubstanz in eine mit einem Prüfmedium gefüllte Überwachungsleitung, die zur Bestimmung von Konzentrationsprofilen flüssiger und/oder gasförmiger Stoffe längs einer Strecke verlegbar ist, und sie betrifft darüber hinaus eine Vorrichtung zur Durchführung des Verfahrens.

Mit der deutschen Patentschrift 24 31 907 ist ein Verfahren zur Lecksuche beschrieben worden, bei dem entlang einer zu überwachenden Strecke eine Überwachungsleitung verlegt wird, die so ausgebildet ist, daß flüssige oder gasförmige Stoffe in ihr Inneres eindringen können. Die Überwachungsleitung ist mit einem Prüfmedium, wie z.B. Luft, gefüllt. In zeitlichen Abständen wird die Säule des Prüfmediums durch die Überwachungsleitung hindurchgeschoben und an einem für die Stoffe empfindlichen Fühler (Sensor) vorbeigeführt. Vor der Beförderung der Säule des Prüfmediums wird in die Überwachungsleitung als Wegmarke ein definiertes geringes Volumen einer Testsubstanz eingebracht, für welches der Fühler ebenfalls empfindlich ist. Auf diese Weise wird ein Test-Peak erzeugt, der zu Kalibrierzwecken herangezogen wird. Mittels solcher Test-Peaks kann die Ortungsgenauigkeit erhöht werden.

In der Praxis wird als Überwachungsleitung ein Diffusionsschlauch verwendet, der entlang der zu überwachenden Strecke, beispielsweise einer Pipeline für Rohöl oder Gas, verlegt wird. Der Diffusionsschlauch ist mit Luft als Prüfmedium gefüllt. Bei Auftreten eines Lecks in der Strecke diffundieren, die aus der Strecke ausgetretenen Stoffe am Ort des Lecks in den Diffusionsschlauch und bilden so eine Marke in der Säule des Prüfmediums. Mittels einer Saugpumpe wird die Säule des Prüfmediums in zeitlichen Abständen an Gassensoren vorbeigeführt. Prinzipiell kann auch eine Druckpumpe verwendet werden. Aus der Aufzeichnung der Pumpzeit gegen das Fühlersignal läßt sich feststellen, an welchem Ort sich das Leck in der Strecke befindet.

Um den Test-Peak zu erzeugen und damit die Vorrichtung zu kalibrieren, wird vor dem Absaugen des Prüfmediums am einen Ende der Strecke mittels einer Dosier-Vorrichtung eine definierte geringe Menge Wasserstoffgas als Testsubstanz in das Prüfmedium eingegeben. Diese Dosier-Vorrichtung kann somit auch als "Test-Peak-Generator" bezeichnet werden. Zur Erzeugung des Wasserstoffs kann dabei eine Elektrolysezelle vorgesehen sein, die über ein Ventil mit der Überwachungsleitung in Verbindung steht. Die Elektrolysezelle und das Ventil werden dann entweder elektrisch über entlang der Strecke geführte Kabel oder durch Funk gesteuert, d.h. ein- und ausgeschaltet. Dabei kann von einer Zeitsteuerung Gebrauch gemacht werden, d.h. zu fest vorgegebenen Zeitpunkten wird die Erzeugung eines Test-Peaks ausgelöst.

Der Nachteil des beschriebenen Test-Peak-Generators für das sogenannte LEOS-Verfahren besteht darin, daß das Verlegen von Kabeln, insbesondere entlang langer Strecken, teuer ist. Auch eine Steuerung der Elektrolysezelle und des Ventils durch Funk ist kostenaufwendig, da ein Sender und ein Empfänger bereitgestellt werden müssen.

Aufgabe der vorliegenden Erfindung ist es, ein Verfahren und eine Vorrichtung der eingangs genannte Art anzugeben, welche die Bereitstellung eines definierten Volumens einer in eine Überwachungsleitung aufzugebenden Test-Substanz auf einfache und kostengünstige Weise ermöglichen.

Diese Aufgabe wird bezüglich des Verfahrens erfindungsgemäß dadurch gelöst, daß die Testsubstanz (H₂) in Abhängigkeit vom Druck, vorzugsweise bei Über- oder Unterschreiten eines Grenzwertes für den Druck, in der Überwachungsleitung freigegeben wird. Bezüglich der Vorrichtung wird sie erfindungsgemäß dadurch gelöst, daß eine Einrichtung vorgesehen ist, die in Abhängigkeit vom Druck in der Überwachungsleitung, vorzugsweise bei Über- oder Unterschreiten eines Grenzwerts für den Druck, das erste Absperrmittel öffnet. Zweckmäßige Weiterbildungen der Erfindung ergeben sich aus den abhängigen Ansprüchen.

Nach der Erfindung handelt es sich also vorliegend um eine Drucksteuerung. Es wird bevorzugt die Testsubstanz im Falle der Verwendung einer Druckpumpe bei Überschreiten und im Falle der Verwendung einer Saugpumpe bei Unterschreiten eines vorgegebenen Grenzwerts für den Druck in der Überwachungsleitung freigegeben, um einen Test-Peak zu erzeugen. Auf diese Weise wird die Erzeugung des Test-Peaks nicht zeitgesteuert, sondern pneumatisch gesteuert und damit automatisch vorgenommen. Wenn die unter Umständen weit entfernte Pumpe in Betrieb gesetzt wird, entsteht ein Unterdruck oder Überdruck gegenüber der Umgebung, der zum Generieren eines Dosiervolumens und damit zum Auslösen eines Test-Peaks führt.

Dieses Verfahren hat den Vorteil, daß das Verlegen von Kabeln entlang der Strecke oder das Bereitstellen einer Funkfernsteuereinrichtung nicht mehr notwendig ist, so daß eine kostengünstige Vorrichtung zur Überwachung der Strecke bereitgestellt wird.

In einer vorteilhaften Ausgestaltung der Erfindung wird die Testsubstanz durch Öffnen eines ersten, zwischen einem Vorrat der Testsubstanz und der Überwachungsleitung eingeschalteten Absperrmittels und durch Öffnen eines zweiten, in die Überwachungsleitung eingeschalteten Absperrmittels freigegeben.

Wie erwähnt, ist zur Durchführung des erfindungsgemäßen Verfahrens eine Vorrichtung vorgesehen, die eine Einrichtung umfaßt, welche bevorzugt bei Über- oder Unterschreiten eines vorgegebenen Grenzwerts für den Druck in der Überwachungsleitung ein Öffnen des ersten Absperrmittels bewirkt. Hierbei handelt es sich also um einen pneumatisch gesteuerten Test-Peak-Generator.

In weiterer vorteilhafter Ausgestaltung besitzt die Einrichtung einen Druckschalter, der bei Über- oder Unterschreiten des vorgegebenen Grenzwerts ein Steuersignal zur Verfügung stellt.

Vorteilhafterweise besitzt die besagte Einrichtung eine Steuerungseinrichtung, die bei Anliegen des Steuersignals das erste Absperrmittel ansteuert, so daß dieses geöffnet wird. Nach einer weiteren Ausgestaltung der Erfindung ist die Einrichtung mit einem zweiten Absperrmittel zur Ansteuerung desselben verbünden. Vorteilhafterweise wird mittels der Einrichtung nach Ablauf einer voreinstellbaren Zeitspanne das zweite Absperrmittel wieder geschlossen.

Nach einer vorteilhaften Weiterbildung der Erfindung wird der Vorratsbehälter für die Testsubstanz durch eine Elektrolysezelle, die bei Ansteuerung als Substanz insbesondere Wasserstoff bereitstellt oder erzeugt, gebildet. Alternativ kann als Vorratsbehälter für die Testsubstanz auch eine Gaskartusche, insbesondere eine mit Butan gefüllte Kartusche, vorgesehen sein. In diesem Fall ist lediglich eine Ansteuerung zur Freisetzung der Testsubstanz, nicht aber zu deren Bereitstellung erforderlich.

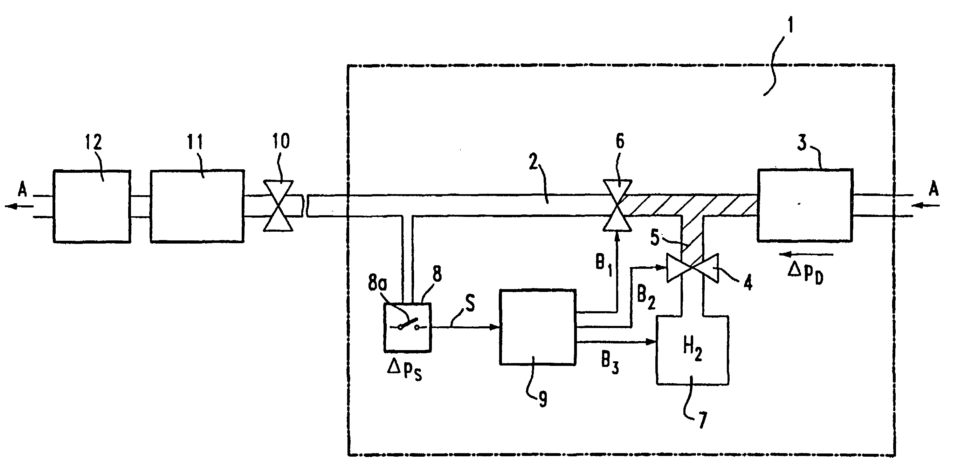

In der Zeichnung ist ein bevorzugtes Ausführungsbeispiel der Erfindung dargestellt. Die Figur zeigt das Blockschaltbild eines Test-Peak-Generators, der an eine Einrichtung zur Bestimmung von Konzentrationsprofilen flüssiger oder gasförmiger Stoffe längs einer Strecke angeschlossen ist.

Die Figur zeigt eine erfindungsgemäße Vorrichtung 1 schematisch anhand eines Blockschaltbilds. Der Pfeil A bezeichnet die Strömungsrichtung in einer Überwachungsleitung 2, die beispielsweise aus einem Diffusionsschlauch gebildet ist und in die eine Drosselstrecke 3 zur Erzeugung einer Druckdifferenz Δp_{D} eingeschaltet sein kann. Über eine Aufgabeleitung 5 ist ein Vorratsbehälter 7 zur Bereitstellung, Erzeugung oder Bevorratung einer Testsubstanz, vorliegend in Form einer Elektrolysezelle 7, zur Erzeugung eines Testgases, wie Wasserstoff H₂, an die Überwachungsleitung 2 angeschlossen. In die Aufgabeleitung 5 ist ein erstes Ventil 4 eingeschaltet. Stromabwärts liegt ein zweites Ventil 6 in der Überwachungsleitung 2. Stromabwärts des zweiten Ventils 6 ist seitwärts ein Druckmesser 8 mit Druckschalter 8a zur Messung des Drucks p und Bestimmung einer Druckabweichung (Differenz zwischen dem Druck p und einem vorgegebenen Sollwert) sowie zur Abgabe eines entsprechenden Steuersignals S vorgesehen. Der Druckmesser 8 ist mit einer Steuerungselektronik 9, wie mit dem Pfeil am Signal S gezeigt ist, steuerungstechnisch verbunden. Die Steuerungselektronik 9 ist, wie die Signalpfeile B₁, B₂ und B₃ verdeutlichen, mit dem zweiten Ventil 6, dem ersten Ventil 4 bzw. mit der Elektrolysezelle 7 verbunden.

Am Ausgang der Vorrichtung 1 ist die Überwachungsleitung 2 unterbrochen eingezeichnet. Hier kann ein recht langes Leitungsstück vorhanden sein, das neben der zu überwachenden Strecke verlegt ist. Dieses Leitungsstück kann einige Kilometer lang sein. Es dient bei Leckagen in der Strecke zur Aufnahme der austretenden flüssigen und/oder gasförmigen Stoffe.

Stromabwärts der Vorrichtung 1 ist schließlich ein drittes Ventil 10, gefolgt von mindestens einem Gassensor 11 und von einer Saugpumpe 12, angeordnet. Diese Komponenten 10, 11 und 12 repräsentieren das eigentliche Betriebs- und Meßsystem.

Die Funktionsweise der dargestellten Vorrichtung 1 ist die folgende:

Solange keine Messung erfolgt, sind das erste Ventil 4, das zweite Ventil 6 und das dritte Ventil 10 geschlossen. In der Leitung 2 herrscht etwa Atmosphärendruck (Umgebungsdruck).

Bei Beginn der Messung wird die weit entfernte Saugpumpe 12 in Betrieb gesetzt, und das dritte Ventil 10 wird geöffnet, so daß das in der Überwachungsleitung 2 befindliche Gasvolumen vorbei an dem Gassensor 11 abgesaugt wird. Damit entsteht in der Leitung 2 ein Unterdruck oder Differenzdruck Δpₛ gegenüber der Umgebung. Dieser Unterdruck Δpₛ wird vom Druckmesser 8 erfaßt und damit vom Druckschalter 8a zur automatischen Einleitung der Abgabe eines Dosiervolumens und damit zur Triggerung eines Test-Peaks ausgenutzt. Bei Unterschreiten eines vorgegebenen Druckgrenzwerts schaltet nämlich der Druckschalter 8a. Er gibt ein Steuersignal S an die Steuerungselektronik 9. Der Druckgrenzwert ist dabei insbesondere so bemessen, daß er kleiner ist als der Atmosphärendruck abzüglich eines Betrags, der den zu erwartenden Luftdruckschwankungen entspricht. Die Steuerungselektronik 9 setzt über das Signal B₃ die Elektrolysezelle 7 in Betrieb. Sie bewirkt auch nachfolgend über das Signal B₂ ein kurzzeitiges Öffnen des ersten Ventils 4. Ein vorgegebenes geringes Volumen des Testgases H₂ gelangt dadurch in die Überwachungsleitung 2. Dies ist gestrichelt gezeichnet. Danach wird über das Signal B₁ das zweite Ventil 6 geöffnet, und die Elektrolysezelle 7 wird abgeschaltet. Mit der durch die Saugpumpe 12 aus der Überwachungsleitung 2 abgesaugten Gassäule (Luftsäule) wird das aufgegebene Test- oder Kalibriergas über den Gassensor 11 geleitet. Es markiert so mit einem Test-Peak im Gassensor 11 das Ende der Säule des Prüfmediums, z.B. Luft. Nach Ablauf einer voreinstellbaren Zeitspanne schließt die Steuerungselektronik 9 wieder das zweite Ventil 6.

## Patentansprüche

1. Verfahren zur Bereitstellung eines Volumens einer Testsubstanz (H₂) in eine mit einem Prüfmedium gefüllte Überwachungsleitung (2), die zur Bestimmung von Konzentrationsprofilen flüssiger und/oder gasförmiger Stoffe längs einer Strecke verlegbar ist,
**dadurch gekennzeichnet, daß** die Testsubstanz (H₂) in Abhängigkeit vom Druck, vorzugsweise bei Über- oder Unterschreiten eines Grenzwertes für den Druck in der Überwachungsleitung (2), freigegeben wird.

2. Verfahren nach Anspruch 1,
**dadurch gekennzeichnet, daß** ein erstes, zwischen einem Vorratsbehälter (7) der Testsubstanz (H₂) und der Überwachungsleitung (2) eingeschaltetes Absperrmittel (4) und ein zweites, in der Überwachungsleitung (2) eingeschaltetes Absperrmittel (6) geöffnet werden, so daß die Testsubstanz (H₂) in die Überwachungsleitung (2) eingegeben wird.

3. Vorrichtung zur Durchführung des Verfahrens nach Anspruch 1 oder 2 mit einem Vorratsbehälter (7) für eine Testsubstanz (H₂), der über ein erstes Absperrmittel (4) mit der Überwachungsleitung (2) verbunden ist,
**dadurch gekennzeichnet, daß** eine Einrichtung (8, 9) vorgesehen ist, die in Abhängigkeit vom Druck in der Überwachungsleitung (2), vorzugsweise bei Überoder Unterschreiten eines Grenzwerts für den Druck, das erste Absperrmittel (4) öffnet.

4. Vorrichtung nach Anspruch 3,
**dadurch gekennzeichnet, daß** die Einrichtung (8, 9) einen Druckschalter (8a) aufweist, der bei Über- oder Unterschreiten des vorgegebenen Grenzwerts ein Steuersignal (S) zur Verfügung stellt.

5. Vorrichtung nach Anspruch 4,
**dadurch gekennzeichnet, daß** die Einrichtung (8, 9) eine Steuerungseinrichtung (9) aufweist, die bei Anliegen des Steuersignals (S) das erste Absperrmittel (4) ansteuert.

6. Vorrichtung nach einem der Ansprüche 3 bis 5,
**dadurch gekennzeichnet, daß** in der Überwachungsleitung (2) ein zweites Absperrmittel (6) eingeschaltet ist, das ebenfalls druckabhängig steuerbar ist.

7. Vorrichtung nach Anspruch 6,
**dadurch gekennzeichnet, daß** die Steuerungseinrichtung (9) mit dem zweiten Absperrmittel (6) zur Ansteuerung desselben verbunden ist.

8. Vorrichtung nach einem der Ansprüche 3 bis 7,
**dadurch gekennzeichnet, daß** der Vorratsbehälter (7) für die Testsubstanz (H₂) ein Wasserstoffbehälter ist, der eine Elektrolysezelle (7) ist.

9. Vorrichtung nach Anspruch 8,
**dadurch gekennzeichnet, daß** die Einrichtung (8, 9) mit der Elektrolysezelle (7) verbunden ist, die bei Ansteuerung durch die Einrichtung (8, 9) als Testsubstanz ein Testgas, insbesondere Wasserstoffgas, bereitstellt.

10. Vorrichtung nach einem der Ansprüche 3 bis 7,
**dadurch gekennzeichnet, daß** der Vorratsbehälter (7) für die Testsubstanz eine Gaskartusche, insbesondere eine Butangaskartusche, ist.

11. Vorrichtung nach einem der Ansprüche 3 bis 10,
**dadurch gekennzeichnet, daß** in die Überwachungsleitung (2) eine Drosselstrecke (3) eingeschaltet ist.

12. Vorrichtung nach einem der Ansprüche 3 bis 11,
**dadurch gekennzeichnet, daß** an einem Ende der Übnerwachungsleitung (2) ein Sensor (11) und eine Pumpe (12) angeordnet sind.

## Claims

1. Method for providing a volume of a test substance (H₂) in a monitoring line (2) which is filled with a test medium and can be laid along a section for determining concentration profiles of liquid and/or gaseous substances, **characterized in that** the test substance (H₂) is released in the monitoring line (2) as a function of the pressure, preferably when the value exceeds or falls below a limit for the pressure.

2. Method according to Claim 1, **characterized in that** a first shut-off means (4), which is connected between a supply container (7) of the test substance (H₂) and the monitoring line (2), and a second shut-off means (6), connected in the monitoring line (2), are opened so that the test substance (H₂) is introduced into the monitoring line (2).

3. Apparatus for carrying out the method according to Claim 1 or 2, having a supply container (7) for a test substance (H₂), which supply container is connected to the monitoring line (2) via a first shut-off means (4), **characterized in that** a device (8, 9) is provided, which opens the first shut-off means (4) as a function of the pressure in the monitoring line (2), preferably when the value exceeds or falls below a limit for the pressure.

4. Apparatus according to Claim 3, **characterized in that** the device (8, 9) has a pressure switch (8a) which provides a control signal (S) when the value exceeds or falls below the given limit.

5. Apparatus according to Claim 4, **characterized in that** the device (8, 9) has a control device (9) which actuates the first shut-off means (4) when the control signal (S) is received.

6. Apparatus according to any of Claims 3 to 5, **characterized in that** a second shut-off means (6) is connected in the monitoring line (2) and can likewise be controlled as a function of the pressure.

7. Apparatus according to Claim 6, **characterized in that** the control device (9) is connected to the second shut-off means (6) for actuation thereof.

8. Apparatus according to any of Claims 3 to 7, **characterized in that** the supply container (7) for the test substance (H₂) is a hydrogen container which is an electrolysis cell (7).

9. Apparatus according to Claim 8, **characterized in that** the device (8, 9) is connected to the electrolysis cell (7) which, when actuated by the device (8, 9), provides a test gas, in particular hydrogen gas, as test substance.

10. Apparatus according to any of Claims 3 to 7, **characterized in that** the supply container (7) for the test substance is a gas cartridge, in particular a butane gas cartridge.

11. Apparatus according to any of Claims 3 to 10, **characterized in that** a throttle section (3) is connected into the monitoring line (2).

12. Apparatus according to any of Claims 3 to 11, **characterized in that** a sensor (11) and a pump (12) are arranged at one end of the monitoring line (2).

## Revendications

1. Procédé de préparation d'un volume d'une substance (H₂) de test dans un conduit (2) de contrôle empli d'un fluide de contrôle qui, pour la détermination de profils de concentration de substance liquide et/ou gazeuse, peut être déplacé le long d'un trajet,
**caractérisé en ce que** la substance (H₂) de test est dégagée en fonction de la pression, de préférence lorsque la pression dans le conduit (2) de contrôle devient supérieure ou inférieure à une valeur limite.

2. Procédé suivant la revendication 1,
**caractérisé en ce que** l'on ouvre un premier moyen (4) d'arrêt monté entre un réservoir (7) de la substance (H₂) d'essai et le conduit (2) de contrôle et un deuxième moyen (6) d'arrêt monté dans le conduit (2) de contrôle, de sorte que la substance (H₂) de test entre dans le conduit (2) de contrôle.

3. Dispositif pour la mise en oeuvre du procédé suivant la revendication1 ou 2, comprenant un réservoir (7) pour une substance (H₂) de test qui communique par un premier moyen (4) d'arrêt avec le conduit (2) de contrôle,
**caractérisé en ce qu'**il est prévu un dispositif (8, 9) qui, en fonction de la pression dans le conduit (2) de contrôle, de préférence lorsque la pression devient inférieure ou devient supérieure à une valeur limite, ouvre le premier moyen (4) d'arrêt.

4. Dispositif suivant la revendication 3,
**caractérisé en ce que** dispositif (8, 9) comporte un interrupteur (8a) à poussoir qui met à disposition un signal (S) de commande, lorsque l'on passe en-deçà ou au-delà de la valeur limite prescrite.

5. Dispositif suivant la revendication 4,
**caractérisé en ce que** dispositif (8, 9) comporte un dispositif (9) de commande qui commande le premier moyen (4) d'arrêt lors de l'application du signal (S) de commande.

6. Dispositif suivant l'une des revendications 3 à 5,
**caractérisé en ce qu'**il est monté dans le conduit (2) de contrôle un deuxième moyen (6) d'arrêt qui peut être commandé également en fonction de la pression.

7. Dispositif suivant la revendication 6,
**caractérisé en ce que** dispositif (9) de commande est relié au deuxième moyen (6) d'arrêt pour commander celui-ci.

8. Dispositif suivant l'une des revendications 3 à 7,
**caractérisé en ce que** le réservoir (7) de la substance (H₂) de test est une cuve à hydrogène qui est une cellule (7) d'électrolyse.

9. Dispositif suivant la revendication 8,
**caractérisé en ce que** le dispositif (8, 9) est relié à la cellule (7) d'électrolyse qui, lors de la commande par le dispositif (8, 9) prépare en tant que substance de test un gaz de test, notamment de l'hydrogène gazeux.

10. Dispositif suivant l'une des revendications 3 à 7,
**caractérisé en ce que** le réservoir (7) de la substance de test est une cartouche de gaz, notamment une cartouche de gaz butane.

11. Dispositif suivant l'une des revendications 3 à 10,
**caractérisé en ce qu'**il est monté une zone (3) d'étranglement dans le conduit (2) de contrôle.

12. Dispositif suivant l'une des revendications 3 à 11,
**caractérisé en ce qu'**il est monté à une extrémité du conduit (2) de contrôle un capteur (11) et une pompe (12).
